# EUROPEAN PATENT APPLICATION

(11) **EP 3 076 525 A1**
(43) Date of publication of application: **05.10.2016**
(21) Application number: 16151434.4
(22) Date of filing: 15.01.2016
(51) Int. Cl.: H02K 5/173, H02K 15/14

(54) **METHOD OF MANUFACTURING ROTOR**

(30) Priority: 31.03.2015 CN 201510147381
(71) Applicant: Cooler Master Co., Ltd., New Taipei City 235 (TW)
(72) Inventor: Lin, Fu-Lung, 235 New Taipei City (TW); Huang, Shih-Wei, 235 New Taipei City (TW); Lin, Tsung-Wei, 235 New Taipei City (TW)
(74) Representative: Becker Kurig Straus

(57) **Abstract**

A method of manufacturing a rotor (1, 3, 5) includes steps of providing a rotor casing (10) and a bearing (12), wherein the rotor casing (10) has an axial hole (100); disposing the bearing (12) in the axial hole (100); and using a laser (14) to weld an inner edge (102) of the axial hole (100) and an outer edge (120) of the bearing (12), so as to fix the bearing (12) with the axial hole (100).

## Description

### Field of the Invention

The present invention relates to a method of manufacturing a rotor, particularly a method using a laser to weld a bearing with a rotor casing.

### Background of the Invention

A motor is a driving device widely used in daily life. The motor can convert electrical energy into mechanical energy and then generate kinetic energy through mechanical energy, so as to drive other devices. The motor essentially consists of a rotor, a stator, a bearing and so on. In the prior art, the bearing is disposed in an axial tube of the stator and an axle of the rotor is inserted into the bearing. When the motor is activated, the stator is immovable and the rotor rotates on the axle with respect to the bearing. In general, the bearing is fixed in the axial tube of the stator in a tight-fitting manner. When the rotor is rotating, the bearing may come off the axial tube of the stator due to vibration resulted from high speed rotation, such that the motor may fail or other components may be damaged.

### Summary of the Invention

The present invention aims at providing a method using a laser to weld a bearing with a rotor casing, thereby resolving the aforesaid problems.

This is achieved by a method of manufacturing a rotor according to claim 1. The dependent claims pertain to corresponding further developments and improvements.

As will be seen more clearly from the detailed description following below, the claimed method of manufacturing a rotor includes steps of providing a rotor casing and a bearing, wherein the rotor casing has an axial hole; disposing the bearing in the axial hole; and using a laser to weld an inner edge of the axial hole and an outer edge of the bearing, so as to fix the bearing with the axial hole.

### Brief Description of the Drawings

In the following, the invention is further illustrated by way of example, taking reference to the accompanying drawings thereof:
FIG. 1 is a perspective view illustrating a rotor according to an embodiment of the invention,
FIG. 2 is a perspective view illustrating the rotor shown in FIG. 1 from another viewing angle,
FIG. 3 is a flowchart illustrating a method of manufacturing the rotor shown in FIG. 1,
FIG. 4 is a schematic view illustrating the process associated with the method shown in FIG. 3,
FIG. 5 is a perspective view illustrating a rotor according to another embodiment of the invention, and
FIG. 6 is a perspective view illustrating a rotor according to another embodiment of the invention.

### Detailed Description

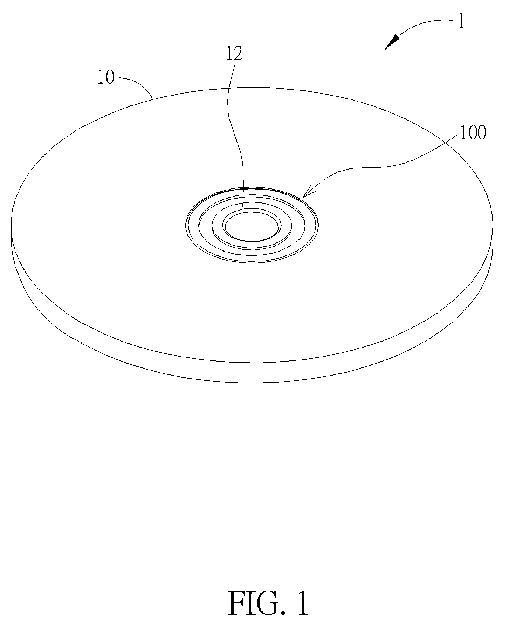

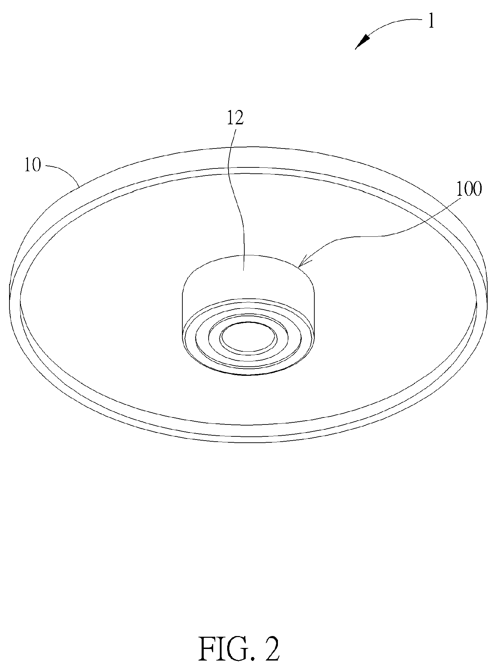

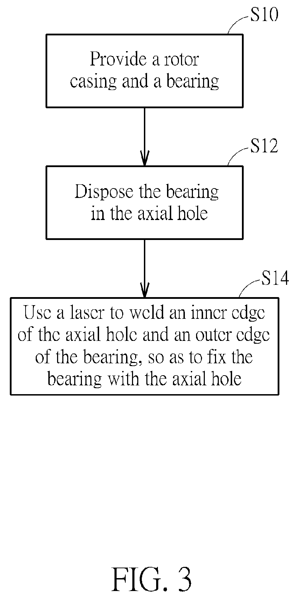

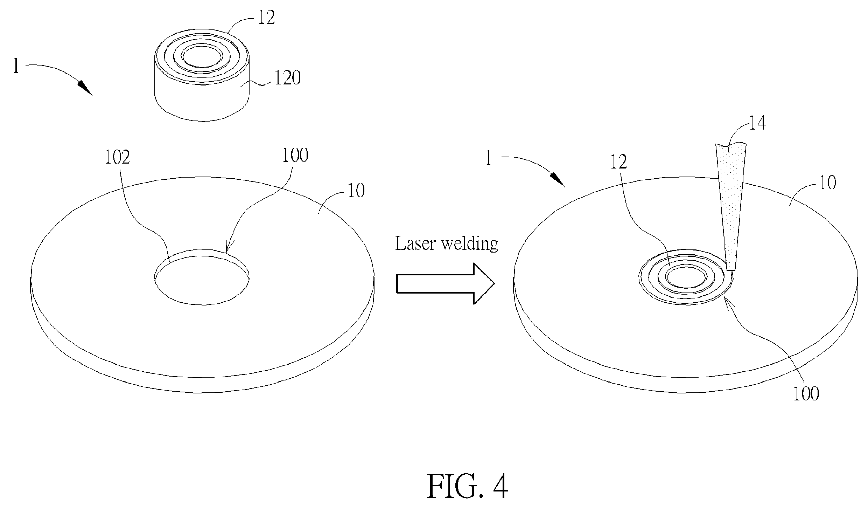

Referring to FIGs. 1 to 4, FIG. 1 is a perspective view illustrating a rotor 1 according to an embodiment of the invention, FIG. 2 is a perspective view illustrating the rotor 1 shown in FIG. 1 from another viewing angle, FIG. 3 is a flowchart illustrating a method of manufacturing the rotor 1 shown in FIG. 1, and FIG. 4 is a schematic view illustrating the process associated with the method shown in FIG. 3.

The rotor 1 of the invention is adapted to a motor, a fan or other driving devices. The rotor 1 can cooperate with a stator to convert electrical energy into mechanical energy and then generate kinetic energy through mechanical energy. To manufacture the rotor 1, first of all, step S10 is performed to provide a rotor casing 10 and a bearing 12, wherein the rotor casing 10 has an axial hole 100. Afterward, step S12 is performed to dispose the bearing 12 in the axial hole 100. Then, step S14 is performed to use a laser 14 to weld an inner edge 102 of the axial hole 100 and an outer edge 120 of the bearing 12, so as to fix the bearing 12 with the axial hole 100.

The laser welding process can form good connection strength between the bearing 12 and the axial hole 100 of the rotor casing 10. Accordingly, when the rotor 1 is rotating, the bearing 12 will not come off the axial hole 100 of the rotor casing 10 due to vibration resulted from high speed rotation. Therefore, the useful life of a motor can be improved effectively. In this embodiment, the laser 14 may be a non-contact laser. If the bearing 12 and the axial hole 100 of the rotor casing 10 are welded by the non-contact laser, the connection strength between the bearing 12 and the axial hole 100 of the rotor casing 10 may be better.

In this embodiment, the bearing 12 may be a ball bearing. Before using the laser 14 to weld the inner edge 102 of the axial hole 100 and the outer edge 120 of the bearing 12, a gap may exist between the inner edge 102 of the axial hole 100 and the outer edge 120 of the bearing 12. In other words, before using the laser 14 to weld the inner edge 102 of the axial hole 100 and the outer edge 120 of the bearing 12, the inner edge 102 of the axial hole 100 and the outer edge 120 of the bearing 12 cannot be set in a tight-fitting manner, such that the laser 14 will not damage the balls of the bearing 12. However, if the gap between the inner edge 102 of the axial hole 100 and the outer edge 120 of the bearing 12 is too big, the laser welding effect will not be good and the connection strength between the bearing 12 and the axial hole 100 of the rotor casing 10 will be insufficient. Accordingly, the gap between the inner edge 102 of the axial hole 100 and the outer edge 120 of the bearing 12 may be preferably smaller than or equal to 0.02 mm, so as to ensure that the connection strength between the bearing 12 and the axial hole 100 of the rotor casing 10 can be kept good.

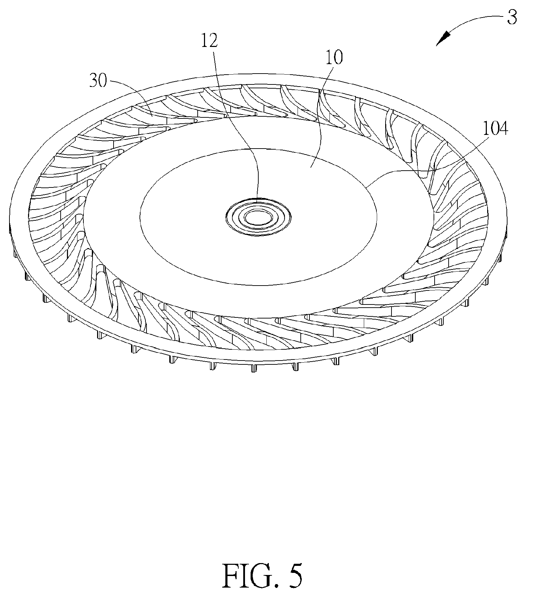

Referring to FIG. 5, FIG. 5 is a perspective view illustrating a rotor 3 according to another embodiment of the invention. The difference between the rotor 3 and the aforesaid rotor 1 is that after manufacturing the rotor 1, the invention may further form a plurality of fan blades 30 on an outer edge 104 of the rotor casing 10 by an injection molding process, so as to manufacture the rotor 3 shown in FIG. 5. At this time, the rotor 3 can be used as a fan wheel.

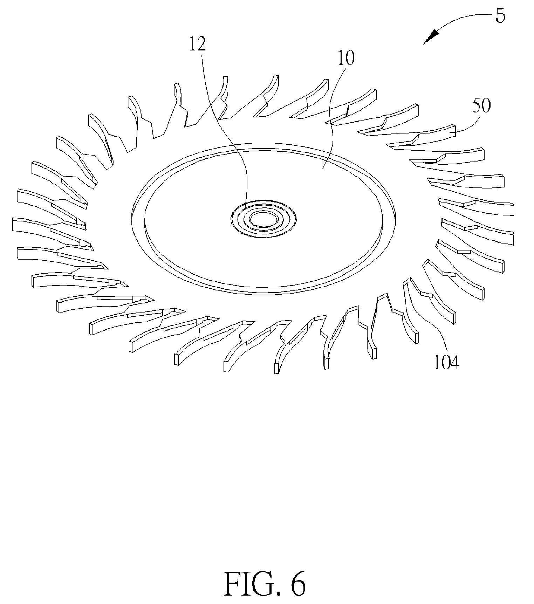

Referring to FIG. 6, FIG. 6 is a perspective view illustrating a rotor 5 according to another embodiment of the invention. The difference between the rotor 5 and the aforesaid rotor 1 is that the rotor 5 further includes a plurality of fan blades 50, wherein the fan blades 50 extend from an outer edge 104 of the rotor casing 10 and are formed with the rotor casing 10 integrally, as shown in FIG. 6. At this time, the rotor 5 can be used as a fan wheel.

As mentioned in the above, the invention uses the laser to weld the bearing with the rotor casing and the laser welding process can form good connection strength between the bearing and the axial hole of the rotor casing. Accordingly, when the rotor is rotating, the bearing will not come off the axial hole of the rotor casing due to vibration resulted from high speed rotation. Therefore, the useful life of a motor can be improved effectively.

## Claims

1. A method of manufacturing a rotor (1, 3, 5) **characterized by** the method comprising:
providing a rotor casing (10) and a bearing (12), wherein the rotor casing (10) has an axial hole (100);
disposing the bearing (12) in the axial hole (100); and
using a laser (14) to weld an inner edge (102) of the axial hole (100) and an outer edge (120) of the bearing (12), so as to fix the bearing (12) with the axial hole (100).

2. The method of claim 1 further **characterized in that** the laser (14) is a non-contact laser.

3. The method of claim 1 further **characterized in that** the bearing (12) is a ball bearing.

4. The method of claim 1 further **characterized in that** before using the laser (14) to weld the inner edge (102) of the axial hole (100) and the outer edge (120) of the bearing (12), a gap exists between the inner edge (102) of the axial hole (100) and the outer edge (120) of the bearing (12).

5. The method of claim 4 further **characterized in that** the gap is smaller than or equal to 0.02 mm.

6. The method of claim 1 further **characterized in that** a plurality of fan blades (50) extends from an outer edge (104) of the rotor casing (10) and is formed with the rotor casing (10) integrally.

7. The method of claim 1 further **characterized in that** the method further comprises:
forming a plurality of fan blades (30) on an outer edge (104) of the rotor casing (10) by an injection molding process.
